(19) Europäisches Patentamt
European Patent Office
Office européen des brevets

(11) **EP 4 424 883 A1**

(12) **EUROPEAN PATENT APPLICATION**
published in accordance with Art. 153(4) EPC

(43) Date of publication:
**04.09.2024 Bulletin 2024/36**

(21) Application number: **22887400.4**

(22) Date of filing: **07.10.2022**

(51) International Patent Classification (IPC):
$C25D\ 1/04^{(2006.01)}$ $C25D\ 5/00^{(2006.01)}$
$H01M\ 4/66^{(2006.01)}$ $C25D\ 3/38^{(2006.01)}$

(52) Cooperative Patent Classification (CPC):
**C25D 1/04; C25D 3/38; C25D 5/00; H01M 4/66;**
Y02E 60/10

(86) International application number:
**PCT/KR2022/015138**

(87) International publication number:
**WO 2023/075197 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.10.2021 KR 20210147036**

(71) Applicant: **LOTTE ENERGY MATERIALS
CORPORATION
Iksan-si, Jeollabuk-do 54586 (KR)**

(72) Inventors:
• **SONG, Kideok**
**Iksan-si Jeollabuk-do 54586 (KR)**
• **LEE, Sun Hyoung**
**Iksan-si Jeollabuk-do 54586 (KR)**
• **LEE, Soo Un**
**Iksan-si Jeollabuk-do 54586 (KR)**
• **PARK, Seulki**
**Iksan-si Jeollabuk-do 54586 (KR)**

(74) Representative: **Mammel und Maser
Patentanwälte
PartG mbB
Tilsiter Straße 3
71065 Sindelfingen (DE)**

(54) **ELECTROLYTIC COPPER FOIL FOR SECONDARY BATTERY CURRENT COLLECTOR**

(57)    Disclosed herein is an electrolytic copper foil for a current collector of a secondary battery. The electrolytic copper foil ranges in elongation per unit thickness at room temperature from 1.3 to 2.0 %/$\mu$m and in I(200)/I(111) at room temperature from 0.4 to 0.5, wherein I(200)/I(111) is a ratio of an intensity of a diffraction peak for (200) lattice plane to an intensity of a diffraction peak for (111) lattice plane on an XRD spectrum for a deposited plane.

【FIG. 1A】

## Description

### [Technical Field]

The present disclosure relates to electrolytic copper foil and, more specifically, to electrolytic copper foil for a current collector of a secondary battery.

### [Background Art]

Copper foil is generally used as a current collector for a secondary battery. As the copper foil, a rolled copper foil obtained by a rolling process is mainly used, but the manufacturing cost is high and it is difficult to manufacture a wide copper foil. In addition, since lubricating oil must be used during rolling processing, the adhesion of the rolled copper foil to the active material may be reduced due to contamination of the lubricating oil, and thus the charge/discharge cycle characteristics of the battery may be deteriorated.

Lithium batteries are accompanied by heat generation due to overcharging and volume change during charge/discharge cycles. In addition, the copper foil should have a low surface roughness ensuring improvement in close adhesion between the copper foil and the electrode active material and a less influence by the copper foil substrate in relation to the expansion and contraction of the active material layer according to the charge/discharge cycle, thereby preventing the occurrence of wrinkles, breakage, etc. in the copper foil as a current collector. Therefore, there is a need for a high-elongation, high-strength, and low-roughness copper foil capable of withstanding the volume change and heat generation of a lithium battery and having excellent close adhesion to an active material. In addition, when used as an anode current collector for a secondary battery, a copper foil has opposite sides coated with an electrode active material. In this regard, it is necessary to maintain the surface roughness of the electrolytic copper foil at the same or a similar level on opposite sides thereof because a difference in surface roughness between the opposite sides results in different battery characteristics.

In a manufacturing process for a secondary battery using such an electrolytic copper foil, the copper foil typically undergoes a vacuum drying step. However, because the vacuum drying is a process that is carried out at high temperature for a long period of time, the adhesion and stress between the copper foil and the active material coated surface may change to reduce the life of the battery or generate cracks during the step of vacuum drying the copper foil.

When an electrolytic copper foil is used as an anode current collector for a secondary battery, both sides of the copper foil are coated with an electrode active material. Therefore, the surface of the electrolytic copper foil preferably provides a good contact with the active material. However, conventional approaches for ensuring good contact with the active material are limited to controlling the surface roughness of the electrolytic copper foil.

Accordingly, there is a demand for an electrolytic copper foil for a current collector of a secondary battery that is capable of providing excellent mechanical properties in various temperature ranges and good contact properties with respect to an active material.

Good contact properties between an electrolytic copper foil and an active material may be associated with the surface energy of the electrolytic copper foil and may be determined by the orientation of the lattice plane of the copper foil. In addition, the crystal lattice orientation of the copper foil may affect the tensile strength and elongation, so that it is necessary to design the crystal lattice orientation of the electrolytic copper foil for high strength, high elongation, and/or good contact properties.

### [Disclosure]

### [Technical Problem]

With the aim of solving the problems encountered in the related art, an aspect of the present disclosure is to provide an electrolytic copper foil with high mechanical strength and high elongation in a wide range of temperatures.

Another aspect of the present disclosure is to provide an electrolytic copper foil, which retains high mechanical strength and high elongation even when a high-temperature drying process is applied thereto.

A further aspect of the present disclosure is to provide an electrolytic copper foil for a current collector of a secondary battery, which can provide good contact performance for an active material coating including an aqueous binder.

A yet further aspect of the present disclosure is to provide an electrolyte copper foil for a current collector of a secondary battery, which enables a uniform active material coating to be formed on the both sides thereof.

A yet additional aspect of the present disclosure is to provide an electrolytic copper foil having a crystal lattice orientation designed for high strength, high elongation, and/or good contact properties.

**[Technical Solution]**

To accomplish the technical subjects, the present disclosure provides an electrolytic copper foil ranging in elongation per unit thickness at room temperature from 1.3 to 2.0 %/$\mu$m and in I(200)/I(111) at room temperature from 0.4 to 0.5, wherein I(200)/I(111) is a ratio of the intensity of the diffraction peak for (200) lattice plane to the intensity of the diffraction peak for (111) lattice plane on an XRD spectrum for a deposited plane.

The electrolytic copper foil of the present disclosure has a tensile strength of 40kgf/mm$^2$ at room temperature and ranges in I(200)/I(111) at room temperature from 0.4 to 0.5, wherein I(200)/I(111) is a ratio of the intensity of the diffraction peak for (200) lattice plane to the intensity of the diffraction peak for (111) lattice plane on an XRD spectrum for a deposited plane

In addition, the electrolytic copper foil of the present disclosure meets the relationship A>B, wherein A is represented by I(200)/I(111) which is a ratio of the intensity of the diffraction peak for (200) lattice plane to the intensity of the diffraction peak for (111) lattice plane on an XRD spectrum for a deposited plane at room temperature, and B is represented by I(200)/I(111) which is a ratio of the intensity of the diffraction peak for (200) lattice plane to the intensity of the diffraction peak for (111) lattice plane on an XRD spectrum for a deposited plane after heat treatment at 200°C for one hour. In this regard, A and B may be in the relationship of -0.3 < (B-A)/A < -0.1.

In another aspect, the electrolytic copper foil of the present disclosure may range in M(200)/M(111) from 0.5 to 1, wherein M(200)/M(111) is a ratio of an orientation index (M(200)) for (200) lattice plane to an orientation index (M(111)) for (111) lattice plane on an XRD spectrum for a deposited plane at room temperature.

In another aspect, the electrolytic copper foil of the present disclosure meets the relationship C > D, wherein C is represented by M(200)/M(111) which is a ratio of is a ratio of an orientation index (M(200)) for (200) lattice plane to an orientation index (M(111)) for (111) lattice plane on an XRD spectrum for a deposited plane at room temperature and D is represented by M(200)/M(111) which is a ratio of an orientation index (M(200)) for (200) lattice plane to an orientation index (M(111)) for (111) lattice plane on an XRD spectrum for a deposited plane after heat treatment at 200°C for one hour. In this regard, C and D may be in the relationship of -0.3 < (D-C)/C < -0.1.

In another aspect, the electrolytic copper foil of the present disclosure may have a TOC content of 5-8 ppm.

In another aspect, the electrolytic copper foil of the present disclosure may have an elongation per unit thickness of 1.4-2.4 %/$\mu$m after heat treatment at 200°C for one hour.

In another aspect, the electrolytic copper foil of the present disclosure may range in the ratio of elongation per unit thickness after heat treatment at 200°C for one hour to elongation per unit thickness at room temperature from 1.05 to 1.25.

The present disclosure provides an electrolytic copper foil that retains high mechanical strength or high elongation in a wide range of temperatures.

The present disclosure provides a current collector that can provide good contact performance for an active material coating including an aqueous binder.

The present disclosure provides an electrolytic copper foil for a current collector of a secondary battery, which enables a uniform active material coating to be formed on the both sides thereof.

**[Description of Drawings]**

The above and other aspects, features and advantages of the present disclosure will be more apparent from the following detailed description taken in conjunction with the accompanying drawing, in which:

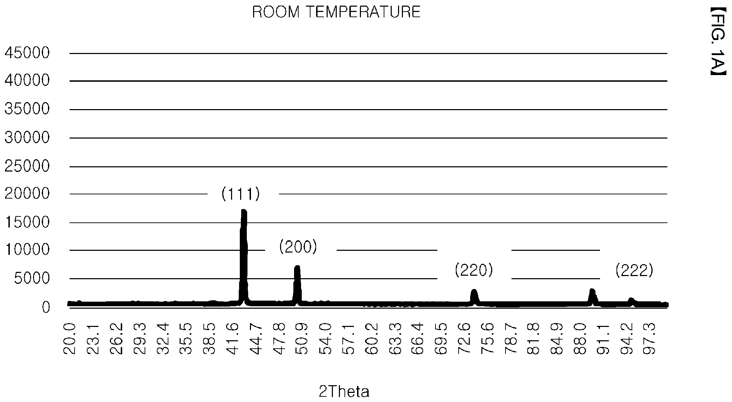

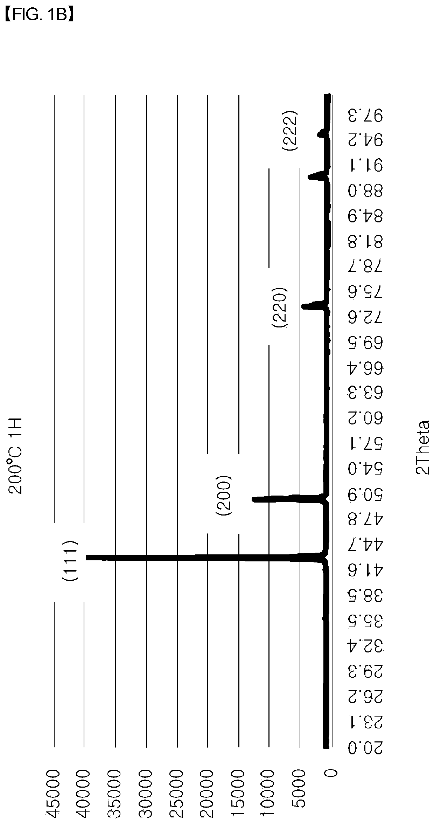

FIGS. 1a and 1b are XRD spectra for room temperature and high temperature copper foil specimens, respectively, according to an embodiment of the present disclosure.

**[Best Mode]**

Accordingly, embodiments and structures illustrated herein are suggested only by way of example but do not represent all technical concepts of the present disclosure. Therefore, it will be understood that various equivalents and modifications may exist which can replace the embodiments described at the time of the application. Below, a detailed description will be given of the present disclosure with reference to the accompanying drawings.

As used herein, the term "S plane" refers to a surface in contact with a drum during the manufacture of an electrolytic copper foil, which is generally called shiny surface, and the term "M plane" refers to a surface opposite thereto, which is called a deposited surface or matte surface. These terms do not express the roughness of the corresponding surfaces, but explain that the S plane may have lower gloss or higher surface roughness than the M plane.

In the present disclosure, the electrolytic copper foil preferably has a tensile strength at room temperature (hereinafter referred to as "room-temperature tensile strength") of 40 kgf/mm$^2$ or greater. In addition, the electrolytic copper foil preferably has a room-temperature tensile strength of 50 kgf/mm$^2$ or less or 45 kgf/mm$^2$ or less.

When coated at a high speed with an anode active material during an anode formation process for a lithium secondary battery, a copper foil is highly likely to cause plastic deformation resulting in defects such as wrinkles, loose coatings, folds, etc. if its room-temperature tensile strength is less than 40 kgf/mm$^2$. A room-temperature tensile strength greater than 50kgf/mm$^2$ may reduce the occurrence of loose coatings or wrinkles, but is highly apt to bring about an imbalance of high tension upon application of anode active materials at high speeds and may be a cause of cracking and tearing due to the increased brittleness of the copper foil itself.

The electrolytic copper foil of the present disclosure retains a high tensile strength even after heat treatment at high temperatures. Preferably, the electrolytic copper foil of the present disclosure has a tensile strength after heat treatment at 200°C for one hour (hereinafter referred to as "high-temperature tensile strength") of 36 kgf/mm$^2$ or greater. In addition, the electrolytic copper foil preferably has a high-temperature tensile strength of 45 kgf/mm$^2$ or less or 42 kgf/mm$^2$ or less.

Here, the high-temperature tensile strength is a measurement value simulating a process in which a high-temperature steps, such as coating drying, vacuum drying, and the like, are applied during the formation of an anode for a lithium secondary battery. When the high-temperature tensile strength of the copper foil is less than 36 kgf/mm$^2$, the anode undergoes deformation induced by a stress against the volumetric expansion thereof during the charge/discharge of the lithium secondary battery, thus decreasing the lifespan of the battery during charge/discharge. A high-temperature tensile strength higher than 45kgf/mm$^2$ decreases the deformation induced by a stress against the volumetric expansion, but imparts an increased brittleness to the copper foil under which cumulative stress provokes cracking and electrode detachment, culminating in a decrease in the lifespan of the electrode. The electrolytic copper foil is required to have high elongation with a moderate strength.

In the present disclosure, the copper foil preferably has a ratio of high-temperature tensile strength to room-temperature tensile strength of 0.9. In addition, the ratio is less than 1 and preferably less than 0.95. In the present disclosure, the electrolytic copper foil is characterized in that the deterioration of tensile strength due to high-temperature heat treatment is suppressed as much as possible.

In the present disclosure, the electrolytic copper foil has a high elongation. In detail, the electrolytic copper foil of the present disclosure is higher than conventional electrolytic copper foils in terms of the value of elongation divided by thickness (hereinafter referred to as "elongation per unit thickness"). For instance, the electrolytic copper foil may have an elongation per unit thickness at room temperature (hereinafter referred to as "room-temperature elongation per unit thickness" of 1.3 or higher or 1.5 or higher. In addition, the room-temperature elongation per unit thickness may be 2.0%/$\mu$m or less, 1.9 %/$\mu$m or less, or 1.8 %/$\mu$m or less. In the present disclosure, the electrolytic copper foil of the present disclosure also exhibits a high elongation even after heat treatment at a high temperature. The electrolytic copper foil of the present disclosure may have an elongation per unit thickness after heat treatment at 200°C for one hour (hereinafter referred to as "high-temperature elongation per unit thickness") of 1.4 %/$\mu$m or more, 1.5 %/$\mu$m or more, or 1.6 %/$\mu$m or more. The high-temperature elongation per unit thickness in the electrolytic copper foil may be 2.4 %/$\mu$m or less, 2.2 %/$\mu$m or less, or 2.0 %/$\mu$m or less.

Improvement of an energy density in a lithium secondary battery requires increasing the content of an active material and decreasing thicknesses of the non-active materials such as copper foil, aluminum foil, separators, etc. Thus, with the increase of an energy density in a lithium secondary battery, the copper foil is required to become thin. However, as the thickness of the copper foil decreases, the physical property energy content of the copper foil decreases. The thinner the copper foil, the easier it is to tear, crack, etc., even when a small external stress is applied thereto. Therefore, only when the elongation per thickness is secured over a certain level, a stable product can be manufactured in the manufacturing process of a copper foil or a manufacturing process of an electrode for a secondary battery using the copper foil whereby stable life performance can be realized in the secondary battery during charging and discharging. As will be described later, the electrolytic copper foil of the present disclosure has a high elongation per unit thickness even at a thin thickness.

In the present disclosure, the electrolytic copper foil exhibits high elongation per unit thickness even at a thickness of as thin as 2 $\mu$m or 4 $\mu$m. By way of example, the thickness region in which the copper foil of the present disclosure exhibits the above-described elongation per unit thickness may be in the range of 2 to 12 $\mu$m, in the range of 4 to 12 $\mu$m, in the range of 2 to 10 $\mu$m, or in the range of 4 to 10 $\mu$m.

In the present invention, the elongation per unit thickness of the electrolytic copper foil shows a narrow deviation over the thickness range of the copper foil. For example, an electrolytic copper foil 4 $\mu$m thick may have an elongation per unit thickness similar to that in an electrolytic copper foil 12 $\mu$m thick.

Moreover, the electrolytic copper foil of the present disclosure has a ratio of high-temperature elongation to room-temperature elongation (elongation ratio) of 1 or higher or 1.05 or higher. In addition, the ratio of high-temperature elongation to room-temperature elongation (elongation ratio) may be 1.25 or less or 1.2 or less.

As will be described later, the electrolytic copper foil of the present disclosure meets the following relationship between a peak intensity of a specific lattice plane on an XRD spectrum and an orientation index (M) calculated from the XRD spectrum.

Here, the orientation index is measured using the orientation index (M) suggested in S. Yoshimura, S. Yoshihara, T. Shirakashi, E. Sato, Electrochim. Acta 39, 589(1994).

For example, for a specimen with (111) plane, the orientation index (M) is calculated as follows:

$$IFR(111) = IF(111)/\{IF(111)+IF(200)+IF(220)+IF(311)\}$$

$$IR(111) = I(111)/\{I(111)+I(200)+I(220)+I(311)\}$$

$$M(111) = IR(111)/IFR(111).$$

IF(111) is an XRD intensity in JCPDS cards, and I(111) is an experiment value. When M(111) is larger than 1, M(111) has preferred orientation parallel to the (111) plane, and when M(111) is smaller than 1, it means that preferred orientation is decreased.

The room temperature XRD spectrum for M plane in the electrolytic copper foil of the present disclosure may have the following characteristics.

In the XRD spectrum, I(200)/I(111) may be 0.5 or less or 0.45 or less. In addition, the deposited plane of the copper foil according to the present disclosure may have an I(200)/I(111) of 0.35 or higher or 0.40 or higher as measured in an XRD spectrum.

Moreover, as for the orientation index (M) for lattice planes, the electrolytic copper foil of the present disclosure may have an M(200)/M(111) of 1 or less, 0.95 or less, or 0.93 or less. In addition, the M(200)/M(111) may be 0.8 or more or 0.85 or more.

After being thermally treated at 200°C for one hour (hereinafter referred to as "high temperature"), the electrolytic copper foil of the present disclosure decreases in I(200)/I(111) as measured in an XRD spectrum. For example, the I(200)/I(111) may be 0.4 or less or 0.35 or less. At the high temperature, the I(200)/I(111) may be 0.2 or more or 0.25 or more.

After one hour of heat treatment at 200°C (hereinafter referred to as "high temperature"), the electrolytic copper foil of the present disclosure decreases in M(200)/M(111) as measured in an XRD spectrum. For example, the M(200)/M(111) may be 0.75 or less or 0.7 or less. At the high temperature, the M(200)/M(111) may be 0.6 or more or 0.65 or more.

In the present disclosure, in order for the electrolytic copper foil to realize high strength and high elongation at room temperature and to have a lattice plane of a specific orientation, a combination of additives selected from the following additives A to C may be used in the electrolyte solution.

Additive A

Additive A is a thiourea compound, a compound in which a thiol group is linked to a nitrogen-bearing heteroring, or a mixture thereof.

Here, the thiourea compound may be at least one selected from the group consisting of ethylenethiourea, diethylthiourea, acethylenethiourea, dipropylthiourea, dibutylthiourea, N-trifluoroacetylthiourea, N-ethylthiourea, N-cyanoacetylthiourea, N-allylthiourea, o-tolylthiourea, N,N'-butylene thiourea, thiazolidinethiol, 4-thiazolinethiol, 4-methyl-2-pyrimidinethiol, 2-thiouraci, but with no limitations thereto. It may be selected from various thiourea compounds available as additives in the art.

The compound of additive A in which a thiol group is linked to a nitrogen-bearing heteroring may be at least one selected from the group consisting of 2-mercapto-5-benzoimidazole sulfonic acid sodium salt, sodium 3-(5-mercapto-1-tetrazolyl)benzene sulfonate, and 2-mercapto benzothiazole, but with no limitations thereto. So long as it is available as an additive in the art, any compound in which a thiol group is linked to a nitrogen-bearing heteroring may be used.

According to the present disclosure, additive A is preferably added in an amount of less than 2 ppm and more preferably in an amount of 0.5-1.9 ppm in the electrolyte solution.

Additive A can improve the strength of the electrolytic copper foil. When a content of additive A exceeds 1.9 ppm, the deposited surface has an increased surface roughness, making it difficult to prepare an electrolytic copper foil with a low surface roughness and decreasing the elongation.

Additive B

Additive B is a sulfonic acid of a sulfur-bearing compound or a metal salt thereof.

For instance, the sulfonic acid of a sulfur-bearing compound or a metal salt thereof may be at least one selected from the group consisting of disodium bis-(3-sulfopropyl)-disulfide (SPS), 3-mercapto-1-propane sulfonic acid (MPS), sodium 3-(N,N-dimethylthiocarbamoyl)-thiopropane sulfonate (DPS), sodium 3-[(amino-iminomethyl)thio]-1-propanesulfonate (UPS), o-ethyldithiocarbonato-S-(3-sulfopropyl)-ester sodium (OPX), 3-(benzothiazolyl-2-mercapto)-propylsulfonate sodium (ZPS), ethylenedithiodipropylsulfonic acid sodium salt, thioglycolic acid, thiophosphoric acid-O-ethyl-bis-(w-sulfopropyl)ester disodium salt, and thiophosphoric acid-tris-($\omega$-sulfopropyl)ester trisodium salt, but with no limitations thereto. Any sulfonic acid of a sulfur-bearing compound or a metal salt thereof is possible as long as it is available as an additive in the art.

In the present disclosure, additive B is preferably added in an amount of 20-80 ppm to the electrolyte solution.

In the present disclosure, additive B can enhance the surface gloss of the electrolytic copper foil. When a content of additive B is below 20 ppm, the electrolytic copper foil may have poor surface gloss. When the content of additive B exceeds 80 ppm, the deposited plane increases in surface roughness, which makes it difficult to prepare an electrolytic copper foil with a low surface roughness and decreases the tensile strength of the electrolytic copper foil.

Additive C

Additive C is a non-ionic water-soluble polymer.

The non-ionic water-soluble polymer may be at least one selected from the group consisting of polyethylene glycol, polyglycerin, nonylphenol polyglycol ether, octane diol-bis-(polyalkylene glycol ether), ocatanol polyalkylene glycol ether, oleic acid polyglycol ether, polyethylene propylene glycol, polyethylene glycoldimethyl ether, polyoxypropylene glycol, polyvinyl alcohol, $\beta$-naphthol polyglycol ether, stearic acid polyglycol ether, and stearyl alcohol polyglycol ether, but with no limitations thereto. So long as it is available as an additive in the art, any water-soluble polymer can be used. For example, the polyethylene glycol may have a molecular weight of 100 to 20,000.

In addition, the non-ionic water-soluble polymer may be at least one selected from the group consisting of hydroxyethyl cellulose and carboxymethylcellulose, but with no limitations thereto.

Moreover, the non-ionic water-soluble polymer may be a water-soluble proteinous glue substance, such as gelatin, collagen, and so on, having a structure in which glycine, hydroxy lysine, and hydroxy proline are repeated. There are six or more classes including type I, type II, and type V. A chain in which three types of amino acids are repeated is called alpha chain. A set of three congruent geometrical helices of alpha chains, with the same axis is referred to as triple helix. In general, as crosslinks occur between these triple helices, a complex structure of collagen is formed. The non-ionic water-soluble polymer of the present disclosure may be at least one selected from the group consisting of collagen and gelatin, but with no limitations thereto.

In the present disclosure, additive C may be preferably added in an amount of 5-10 ppm to the electrolyte solution.

Additive C used in the copper electrolyte solution can decrease the surface roughness and increase the surface gloss in the electrolytic copper foil. When additive C is used at a content less than 5 ppm, the deposited surface has an increased surface roughness, which makes it difficult to prepare an electrolytic copper foil with a low surface roughness and decreases the gloss of the electrolytic copper foil. A content of additive C exceeding 10 ppm may cause the electrolytic copper foil to decrease in strength and hardness at high temperatures.

The effects of the additives A, B, and C in the electrolyte on physical properties of the electrolytic copper foil have been described, but the above description is exemplary. The type, content, or combination of individual additives of the present disclosure may also affect other physical properties of the electrolytic copper foil manufactured in the present disclosure through unknown mechanisms.

Although it cannot be uniquely defined, the XRD spectrum may vary depending on types, contents, and/or relative ratios of the additives in the present disclosure. For example, when the concentration of additive C increases or the relative ratio of additive C to additives A and B increases, the (200) plane of the electrolytic copper foil tends to decrease.

**[Mode for Invention]**

<PREPARATION EXAMPLE 1: Electrolytic Copper Foil>

(EXAMPLES 1 TO 5)

Electroplating was conducted at 50-60°C under a current density of 50-70 A/dm$^2$ (ASD) in an electrolyte containing 200-452 g/L CuSO$_4$ 5H$_2$O, 30-250 g/L sulfuric acid, and 10-30 ppm chlorine ions. As additive A, 0.5-1.9 ppm ETU (ethylene thiourea) was used, and 20-80ppm DPS (3-(N,N-dimethylthiocarbomoyl)-thiopropane sulfonate sodium) and 5-10ppm PEG (polyethylene glycol, Mw: 500-4000) were added as additive B to the electrolyte. The compositions of the electrolyte in each Example are summarized in Table 1. The thickness of the plated film differed from one example to another.

(COMPARATIVE EXAMPLE 1)

A plated film with a thickness of 18 μm was prepared by electroplating at 50-60°C under a current density of 50-70 A/dm² (ASD) in an electrolyte containing 100 g/L Cu, 150 g/L sulfuric acid, and 20 ppm chlorine ions. To the electrolyte were added 2 ppm DET (diethylthiourea) as additive A, 45ppm SPS (bis-(3-sulfopropyl)-disulfide disodium salt) and 10 ppm ZPS (3-(benzothiazolyl-2-mercapto)-propylsulfonic acid sodium salt) as additive B, 20ppm PEG (polyethylene glycol, Mw : 500-4000) as additive C, and 3 ppm JGB (Janus Green B) as additive D.

(COMPARATIVE EXAMPLE 2)

A plated film with a thickness of 4 μm was prepared by electroplating at 50-60°C under a current density of 50-70 A/dm² (ASD) in an electrolyte containing 90 g/L Cu, 120 g/L sulfuric acid, and 30 ppm chlorine ions. To the electrolyte were added 3 ppm DET (diethylthiourea) as additive A, 60 ppm SPS (bis-(3-sulfopropyl)-disulfide disodium salt) and 40ppm ZPS (3-(benzothiazolyl-2-mercapto)-propionic acid sodium salt) as additive B, 20 ppm PEG (polyethylene glycol, Mw : 500-4000) and 10 ppm PGL (polyglycerin) as additive C, 375 ppm Zn, and 75 ppm Fe.

(COMPARATIVE EXAMPLE 3)

A plated film with a thickness of 6 μm was prepared by electroplating at 50-60°C under a current density of 50-70 A/dm² (ASD) in an electrolyte containing 100 g/L Cu, 130 g/L sulfuric acid, and 30 ppm chlorine ions. To the electrolyte were added 26 ppm DET (diethylthiourea) as additive A, 80 ppm SPS (bis-(3-sulfopropyl)-disulfide disodium salt) and 40 ppm ZPS (3-(benzothiazolyl-2-mercapto)-propionic acid sodium salt) as additive B, and 20 ppm PEG (polyethylene glycol, Mw : 500-4000) and 10 ppm PGL (polyglycerin) as additive C.

(COMPARATIVE EXAMPLE 4)

A plated film with a thickness of 12 μm was prepared by electroplating at 50-60°C under a current density of 50-70 A/dm² (ASD) in an electrolyte containing 80 g/L Cu, 140 g/L sulfuric acid, and 10 ppm chlorine ions. To the electrolyte were added 5 ppm MPS (3-mercapto-1-propane sulfonic acid) as additive B and DDAC (diallyldimethyl ammonium chloride) as additive E.

(COMPARATIVE EXAMPLE 5)

A plated film with a thickness of 12 μm was prepared by electroplating at 50-60°C under a current density of 50-70 A/dm² (ASD) in an electrolyte containing 80 g/L Cu, 140 g/L sulfuric acid, and 10 ppm chlorine ions. To the electrolyte were added 5 ppm MPS (3-mercapto-1-propane sulfonic acid) as additive B and DDAC (diallyldimethyl ammonium chloride) as additive E.

Compositions of the electrolyte solutions for individual Examples are summarized in Table 1, below.

TABLE 1

| Ex. # | Cu (g/L) | $H_2SO_4$ (g/L) | Additive | | | | | | | | | | | | Cl⁻ | Zn | Fe |
|---|---|---|---|---|---|---|---|---|---|---|---|---|---|---|---|---|---|
| | | | A | | B | | | | C-1 | | C-2 | C-3 | D | E | | | |
| | | | ETU | DET | SPS | MPS | DPS | ZPS | PEG | PGL | HEC | Gelatin | JGB | DDAC | | | |
| 1 | 50 | 30 | 1.8 | | | | 80 | | 10 | | | | | | 30 | | |
| 2 | 80 | 50 | 1.5 | | | | 40 | | 5 | | | | | | 30 | | |
| 3 | 90 | 100 | 1 | | | | 30 | | 5 | | | | | | 30 | | |
| 4 | 100 | 120 | 0.8 | | | | 25 | | 5 | | | | | | 30 | | |
| 5 | 100 | 150 | 0.5 | | | | 20 | | 5 | | | | | | 30 | | |
| C.1 | 100 | 150 | | 2 | 45 | | | 10 | 20 | | | | 3 | | 20 | | |
| C.2 | 90 | 120 | | 3 | 60 | | | 40 | 20 | 10 | | | | | 30 | 375 | 75 |
| C.3 | 100 | 130 | | 2.5 | 80 | | | 40 | 20 | 10 | | | | | 30 | | |
| C.4 | 80 | 140 | | | | 5 | | | | | | | | 3 | 10 | | |
| C.5 | 80 | 100 | | | 4 | | | | | | 2 | 5 | | | 13 | | |

<Evaluation of Physical Properties>

Each of the surface-treated copper foil specimens prepared in the Examples and Comparative Examples was measured for physical properties and the measurements are listed in Tables 1 and 2. Physical properties and measurement methods therefor are as follows.

a. Tensile strength/Elongation

The electrolytic copper foils were prepared into specimens, each having a dimension of 12.7mm in width * 50 mm in gauge length. A tensile test was performed on each specimen at a crosshead speed of 50.8 mm/min according to the standard of IPC-TM-650 2.4.18B to measure a maximum load and an elongation at break, which were set forth as tensile strength and elongation, respectively. For each specimen, the tensile strength and elongation were measured at room temperature and after heat treatment 200°C for one hour, and the results are given in Table 2, below.

b. TOC measurement of electrolytic copper foil

The electrolytic copper foils prepared in the Examples and Comparative Examples were dissolved in a solvent including 60 ml of hydrochloric acid (35%) and 40 ml of hydrogen peroxide (30%) and analyzed for TOC content therein, using TOC-V WP, Shimadzu. The results are listed in Table 2, below.

c. XRD analysis

The M planes in the copper foil specimens prepared in the Examples and Comparative Examples were subjected to XRD analysis. XRD analysis was performed on specimens before heat treatment (room temperature) and after heat treatment at 200°C for one hour (high temperature). FIGS. 1a and 1b are XRD spectra for the room temperature and high temperature specimens of Example 1.

From the XRD measurements, Ir(200)/Ir(111), M(200)/M(111), change rates defined as Ir and M changes divided by room temperature values (i.e., (high temperature value-room temperature value)/room temperature value) were calculated, and the results are summarized in Table 3.

TABLE 2

| Ex. # | Thickness ($\mu$m) | Tensile Strength (kgf/mm$^2$) | | Elongation (%) | | Elongation per unit thickness (%/$\mu$m) | | TOC |
|---|---|---|---|---|---|---|---|---|
| | | Room Temp. | High Temp. | Room Temp. | High Temp. | Room Temp. | High Temp. | |
| 1 | 4 | 42.6 | 40.6 | 5.2 | 5.6 | 1.30 | 1.40 | 5.0 |
| 2 | 5 | 42.3 | 39.3 | 8.3 | 9.7 | 1.66 | 1.95 | 5.7 |
| 3 | 6 | 42.3 | 40 | 11.8 | 13.8 | 1.97 | 2.30 | 5.6 |
| 4 | 8 | 43.4 | 40.2 | 12 | 15.1 | 1.50 | 1.88 | 7.5 |
| 5 | 10 | 41.8 | 38.5 | 15.4 | 16.8 | 1.54 | 1.68 | 8.0 |
| C.1 | 18 | 46.2 | 43.3 | 7.21 | 11.63 | 0.40 | 0.65 | 10 |
| C.2 | 4 | 43.7 | 41.9 | 3.2 | 4.1 | 0.80 | 1.03 | 10 |
| C.3 | 6 | 42.3 | 40.5 | 7.2 | 7 | 1.20 | 1.17 | 9 |
| C.4 | 12 | 38.2 | 34.6 | 6.2 | 9.8 | 0.52 | 0.82 | 9 |
| C.5 | 12 | 33.1 | 31.7 | 6.7 | 10 | 0.56 | 0.83 | 10 |

It is understood from data of Table 2 that the specimens of Examples 1 to 5 exhibited a strength of as high as 40 kgf/mm$^2$ at room temperature and retained high strength even after heat treatment at as high as 200°C.

As shown in Table 2, the specimens of Examples 1 to 5 exhibited an elongation per unit thickness of as high as 1.3-1.97 %/$\mu$m at room temperature. Even the 4 $\mu$m-thick specimen of Example 1 had an elongation per unit thickness of 1.3 %/$\mu$m whereas the elongation per unit thickness in the specimens of the Comparative Examples was 1.2 or less.

TABLE 3

| | | I (200) / I (111) | Change rate (Ir) | M (200) / M (111) | Change rate (M) |
|---|---|---|---|---|---|
| Ex. 1 | Room Temp. | 0.44 | -0.23 | 0.95 | -0.25 |
| | High Temp. | 0.34 | | 0.71 | |
| Ex. 2 | Room Temp. | 0.5 | -0.20 | 1 | -0.24 |
| | High Temp. | 0.4 | | 0.76 | |
| Ex. 3 | Room Temp. | 0.45 | -0.27 | 0.94 | -0.26 |
| | High Temp. | 0.33 | | 0.7 | |
| Ex. 4 | Room Temp. | 0.42 | -0.10 | 0.79 | -0.10 |
| | High Temp. | 0.38 | | 0.71 | |
| Ex. 5 | Room Temp. | 0.41 | -0.24 | 0.9 | -0.27 |
| | High Temp. | 0.31 | | 0.66 | |
| C. Ex. 1 | Room Temp. | 0.35 | 0.03 | 0.77 | 0.04 |
| | High Temp. | 0.36 | | 0.80 | |
| C. Ex. 2 | Room Temp. | 0.26 | 0.23 | 0.56 | 0.25 |
| | High Temp. | 0.32 | | 0.70 | |
| C. Ex. 3 | Room Temp. | 0.24 | 0.42 | 0.52 | 0.40 |
| | High Temp. | 0.34 | | 0.73 | |
| C. Ex. 4 | Room Temp. | 0.58 | 0.12 | 1.25 | 0.13 |
| | High Temp. | 0.65 | | 1.41 | |
| C. Ex. 5 | Room Temp. | 0.56 | 0.13 | 1.22 | 0.11 |
| | High Temp. | 0.63 | | 1.36 | |

As shown in Table 3, the specimens from the Examples of the present disclosure have a room temperature I(200)/I(111) of 0.4-0.5. In the specimens from the Examples of the present disclosure, high-temperature I(200)/I(111) values are lower than room temperature I(200)/I(111) values. This tendency was also true of M(200)/M(111). In contrast, Comparative Examples 1 to 5 exhibited increased high temperature I(200)/I(111) values.

As shown in the Examples and Comparative Examples, the lattice planes of the electrolytic copper foils can change in orientation, depending on the type, content, and/or relative ratio of the additives. For example, (200) plane tended to decrease when additive C was added at 20 ppm or greater as understood in Comparative Examples 1 to 3. For Comparative Examples 4 and 5, (200) plane was developed in the absence of additive C.

The above-described embodiments are in all respects as illustrative and non-limiting, it is to be understood that the scope of the present disclosure are described below, rather than the above description appears by the claims, and the scope of the present disclosure is defined by the appended claims rather than the foregoing description and the exemplary embodiments described therein. Various modifications made within the meaning of an equivalent of the claims of the disclosure and within the claims are to be regarded to be in the scope of the present disclosure.

Industrial Applicability

The present disclosure is applicable to electrolytic copper foils.

**Claims**

1.  An electrolytic copper foil, ranging in elongation per unit thickness at room temperature from 1.3 to 2.0 %/μm and in I(200)/I(111) at room temperature from 0.4 to 0.5,
    wherein I(200)/I(111) is a ratio of an intensity of a diffraction peak for (200) lattice plane to an intensity of a diffraction peak for (111) lattice plane on an XRD spectrum for a deposited plane.

2. An electrolytic copper foil, having a tensile strength at room temperature of 40 kgf/mm$^2$ or greater and ranging in I(200)/I(111) at room temperature from 0.4 to 0.5, wherein I(200)/I(111) is a ratio of an intensity of a diffraction peak for (200) lattice plane to an intensity of a diffraction peak for (111) lattice plane on an XRD spectrum for a deposited plane.

3. The electrolytic copper foil of claim 1 or 2, meeting the relationship A>B, wherein A is represented by I(200)/I(111) which is a ratio of an intensity of a diffraction peak for (200) lattice plane to an intensity of a diffraction peak for (111) lattice plane on an XRD spectrum for a deposited plane at room temperature, and B is represented by I(200)/I(111) which is a ratio of an intensity of a diffraction peak for (200) lattice plane to an intensity of a diffraction peak for (111) lattice plane on an XRD spectrum for a deposited plane after heat treatment at 200°C for one hour.

4. The electrolytic copper foil of claim 3, wherein the A and B are in the relationship of -0.3 < (B-A)/A < -0.1.

5. The electrolytic copper foil of claim 1 or 2, ranging in M(200)/M(111) from 0.5 to 1, wherein M(200)/M(111) is a ratio of an orientation index (M(200)) for (200) lattice plane to an orientation index (M(111)) for (111) lattice plane on an XRD spectrum for a deposited plane at room temperature.

6. The electrolytic copper foil of claim 5, meeting the relationship C > D, wherein C is represented by M(200)/M(111) which is a ratio of is a ratio of an orientation index (M(200)) for (200) lattice plane to an orientation index (M(111)) for (111) lattice plane on an XRD spectrum for a deposited plane at room temperature and D is represented by M(200)/M(111) which is a ratio of is a ratio of an orientation index (M(200)) for (200) lattice plane to an orientation index (M(111)) for (111) lattice plane on an XRD spectrum for a deposited plane after heat treatment at 200°C for one hour.

7. The electrolytic copper foil of claim 6, wherein the C and D are in the relationship of -0.3 < (D-C)/C < -0.1.

8. The electrolytic copper foil of claim 1 or 2, wherein the electrolytic copper foil has a TOC content of 5-8 ppm.

9. The electrolytic copper foil of claim 1 or 2, wherein the electrolytic copper foil has an elongation per unit thickness of 1.4-2.4 %/μm after heat treatment at 200°C for one hour.

10. The electrolytic copper foil of claim 9, wherein the electrolytic copper foil ranges in the ratio of elongation per unit thickness after heat treatment at 200°C for one hour to elongation per unit thickness at room temperature from 1.05 to 1.25.

EP 4 424 883 A1

ROOM TEMPERATURE

【FIG. 1B】

## INTERNATIONAL SEARCH REPORT

| International application No. |
| --- |
| **PCT/KR2022/015138** |

**A.    CLASSIFICATION OF SUBJECT MATTER**

**C25D 1/04**(2006.01)i; **C25D 5/00**(2006.01)i; **H01M 4/66**(2006.01)i; **C25D 3/38**(2006.01)i

According to International Patent Classification (IPC) or to both national classification and IPC

**B.    FIELDS SEARCHED**

Minimum documentation searched (classification system followed by classification symbols)

C25D 1/04(2006.01); B32B 15/04(2006.01); B32B 15/20(2006.01); H01M 10/052(2010.01); H01M 4/13(2010.01); H01M 4/134(2010.01); H01M 4/66(2006.01); H05K 1/05(2006.01); H05K 1/09(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전해동박(electrolytic copper foil), 연신율(elongation rate), 인장강도(tensile strength), 회절피크(diffraction peak), 배향지수(orientation factor)

**C.    DOCUMENTS CONSIDERED TO BE RELEVANT**

| Category* | Citation of document, with indication, where appropriate, of the relevant passages | Relevant to claim No. |
| --- | --- | --- |
| X | KR 10-2014-0050541 A (ILJIN MATERIALS CO., LTD.) 29 April 2014 (2014-04-29)<br>See claims 1-2, 6, 8, 10-11 and 15. | 1-7,9-10 |
| Y | | 8 |
| Y | KR 10-2017-0036264 A (LS MTRON LTD.) 03 April 2017 (2017-04-03)<br>See claim 11. | 8 |
| A | KR 10-1449342 B1 (ILJIN MATERIALS CO., LTD.) 13 October 2014 (2014-10-13)<br>See paragraphs [0017] and [0051] and claims 2 and 12. | 1-10 |
| A | KR 10-1500566 B1 (ILJIN MATERIALS CO., LTD.) 12 March 2015 (2015-03-12)<br>See paragraphs [0023] and [0041] and claim 6. | 1-10 |
| A | KR 10-2015-0041577 A (ILJIN MATERIALS CO., LTD.) 16 April 2015 (2015-04-16)<br>See paragraphs [0015], [0035] and [0123] and claim 1. | 1-10 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 January 2023** | **25 January 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2022/015138**

| Patent document cited in search report | | | Publication date (day/month/year) | Patent family member(s) | | | Publication date (day/month/year) |
|---|---|---|---|---|---|---|---|
| KR | 10-2014-0050541 | A | 29 April 2014 | KR | 10-1605071 | B1 | 23 March 2016 |
| | | | | TW | 201428112 | A | 16 July 2014 |
| | | | | TW | I504764 | B | 21 October 2015 |
| | | | | WO | 2014-061983 | A1 | 24 April 2014 |
| KR | 10-2017-0036264 | A | 03 April 2017 | CN | 106558703 | A | 05 April 2017 |
| | | | | CN | 106558703 | B | 18 October 2019 |
| | | | | KR | 10-2473557 | B1 | 01 December 2022 |
| KR | 10-1449342 | B1 | 13 October 2014 | CN | 105705329 | A | 22 June 2016 |
| | | | | CN | 105705329 | B | 15 May 2018 |
| | | | | EP | 3067199 | A1 | 14 September 2016 |
| | | | | EP | 3067199 | B1 | 22 August 2018 |
| | | | | ES | 2695229 | T3 | 02 January 2019 |
| | | | | HU | E041575 | T2 | 28 May 2019 |
| | | | | JP | 2016-537514 | A | 01 December 2016 |
| | | | | JP | 6379207 | B2 | 22 August 2018 |
| | | | | PL | 3067199 | T3 | 30 April 2019 |
| | | | | TW | 201523992 | A | 16 June 2015 |
| | | | | TW | I574452 | B | 11 March 2017 |
| | | | | US | 10686191 | B2 | 16 June 2020 |
| | | | | US | 2016-0260981 | A1 | 08 September 2016 |
| | | | | WO | 2015-069075 | A1 | 14 May 2015 |
| KR | 10-1500566 | B1 | 12 March 2015 | CN | 106104876 | A | 09 November 2016 |
| | | | | CN | 106104876 | B | 18 October 2019 |
| | | | | EP | 3121885 | A1 | 25 January 2017 |
| | | | | EP | 3121885 | B1 | 27 February 2019 |
| | | | | EP | 3121885 | B9 | 23 October 2019 |
| | | | | ES | 2720076 | T3 | 17 July 2019 |
| | | | | HU | E043115 | T2 | 28 August 2019 |
| | | | | JP | 2017-519112 | A | 13 July 2017 |
| | | | | JP | 6355814 | B2 | 11 July 2018 |
| | | | | PL | 3121885 | T3 | 30 August 2019 |
| | | | | US | 10158119 | B2 | 18 December 2018 |
| | | | | US | 2017-0141404 | A1 | 18 May 2017 |
| | | | | WO | 2015-142101 | A1 | 24 September 2015 |
| KR | 10-2015-0041577 | A | 16 April 2015 | KR | 10-1605071 | B1 | 23 March 2016 |
| | | | | KR | 10-2014-0050541 | A | 29 April 2014 |
| | | | | WO | 2014-061983 | A1 | 24 April 2014 |

Form PCT/ISA/210 (patent family annex) (July 2022)

**REFERENCES CITED IN THE DESCRIPTION**

**Non-patent literature cited in the description**

- S. YOSHIMURA ; S. YOSHIHARA ; T. SHIRAKASHI ; E. SATO. *Electrochim. Acta,* 1994, vol. 39, 589